# EUROPEAN PATENT SPECIFICATION

(11) **EP 2 092 481 B1**
(45) Date of publication and mention of the grant of the patent: **13.08.2014**
(21) Application number: 06812742.2
(22) Date of filing: 10.11.2006
(51) Int. Cl.: G06Q 10/10, H04M 3/42, H04Q 3/62

(54) **METHOD AND NETWORK UNIT FOR DETERMINING A MEASURE OF RELEVANCY BETWEEN ITEMS**
VERFAHREN UND NETZWERKEINHEIT ZUM BESTIMMEN EINES MASSES AN RELEVANZ ZWISCHEN ELEMENTEN
PROCÉDÉ ET UNITÉ DE RÉSEAU PERMETTANT DE DÉTERMINER UN INDICE DE PERTINENCE ENTRE DES ARTICLES

(43) Date of publication of application: 26.08.2009
(73) Proprietor: Telefonaktiebolaget LM Ericsson (publ), 164 83 Stockholm (SE)
(72) Inventor: REITSMA, Erik Jan, 2721 DG Zoetermeer (NL)
(74) Representative: Verduin, Herman Jan
(86) International application number: PCT/NL2006/050283
(87) International publication number: WO 2008/056974

(56) References cited:
- EP-A2- 0 802 665
- US-A1- 2005 043 986

## Description

### Technical field

The present invention relates to a method for determining a measure of relevancy between two selected items of a plurality of interrelated items. In a further aspect, the present invention relates to a network unit in a communication network, implementing an application using a measure of relevancy between two selected items of a plurality of interrelated items.

### Background

Many applications exist in which an item must be selected based on relevancy of that item. In an exemplary application, a service determines which persons are relevant in a situation, based on the relations between the persons and other items, which are stored in a database. For example, a police officer may be relevant for some incident because a database contains a record which states, that the officer has dealt with the suspect of the incident. Or, the police officer may be relevant because the database contains a record which states, that the officer has had an appointment at the location of the incident. Or, the police officer may be on duty in the area where the incident took place.

Using current technology, the different ways in which a person can be relevant is determined first. Then, for every way in which a person is relevant, the amount of relevance is determined independently according to some formula that models the relevancy. Then these relevancies are added to find the total relevancy of the person. The existing solution requires that the different ways in which a person is relevant, are determined by an expert. Then for each type of relevancy, software must be written to determine which persons are relevant. When there are many ways in which a person can be relevant, this method requires a lot of work from the expert.

Another disadvantage is, that this does not give an appropriate model for relevance. There can be unforeseen chains of relevancy leading to a person. A chain of relevancy occurs when a person is relevant for an item, which is relevant for another item, which is relevant for another, etcetera, until it is finally relevant for the item in which there is interest, for example an incident. These relevancy chains will not be taken into account using current methods.

### Summary

The present invention seeks to provide an improved method for determining relevancy of a specific item.

According to the present invention, a method according to the preamble defined above is provided, in which the method comprises modeling the plurality of interrelated items (e.g. stored in a database) as nodes in a network (e.g. an electronic network), modeling a relation between two items as an impedance between two associated nodes, in which the impedance is a function of the relevancy between the two items, determining the impedance value between two nodes associated with the two selected items, and determining the measure of relevancy as a function (e.g. the inverse) of the impedance value between the two nodes.

This method provides a flexible way of determining the relevance of items (e.g. representing persons) in a database, in which relations between the items are known. The present method provides a more realistic relevance model than existing methods.

In a further embodiment the impedance is a resistor, which allows to reliably model relevance between associated items, and to easily determine the measure of relevancy between two selected items.

The impedance may in a further embodiment have a value which is a function of a parameter, e.g. a context parameter. The resulting measure of relevancy is then also a function of that parameter, allowing re-use of the calculation when only the parameter changes and not the relevancy relation. In a specific embodiment, the impedance has a time varying value, e.g. a periodically changing, continuous changing, or stepwise changing value. This allows e.g. to model a relation between items of which the relevancy declines over time. In a further embodiment, the function comprises a quotient of polynomials of one or more parameters. This allows an casier method to add, subtract, multiply, and divide the various impedances in the network in order to determine the measure of relevancy between the two selected items, as these operations result again in a quotient of polynomials of the one or more parameters.

In a further embodiment, the impedance value between the two nodes is determined by adding a voltage source with a predetermined voltage, the terminals of the voltage source being connected to the two nodes, and determining the current through the voltage source. Especially when choosing a voltage source of 1 Volt, the impedance between the nodes associated with the two selected items may be directly determined by determining or measuring the current through the voltage source.

In certain applications, it may be required to determine the contribution of a specific item or a specific relation. In one further embodiment, a contribution of an item to the measure of relevancy is calculated by determining the current through the associated node, i.e. the sum of current flowing in and out of that node. In a second further embodiment, a contribution of a relation between two items to the measure of relevancy is calculated by determining the current through the impedance between associated nodes.

In a further embodiment, intermediate results of determining the impedance value or of determining the measure of relevancy are stored for re-use. In certain applications, this may reduce the required overall processing capacity, as certain calculations need not be done again.

In a further aspect, the present invention relates to a network unit according to the preamble defined above, in which the network unit is arranged to execute the method according to any of the method embodiments. The network unit may e.g. be an application server or an already existing network unit, such as a telephone switch.

In a further embodiment, the communication network is arranged to provide connections to one or more terminals, such as (mobile) telephones, and the network unit is arranged to determine a most relevant terminal to contact. This may e.g. be an implementation of an emergency service application allowing an operator to quickly determine who should be contacted in case of an emergency relating to a specific person.

In another embodiment, the network unit is arranged to receive a call directed at an item of a first type, and to determine the most relevant terminal to contact associated with an item of a second type, in which the first type and second type are different. This embodiment may e.g. be implemented in a private exchange system to route calls to in a company. For example, a call to a number associated with a project may be routed to an employee most relevant to that project.

In an even further aspect, the present invention relates to a computer program product comprising computer executable code, which when loaded on a computer system, allows the computer system to execute the method according to any one of the embodiments above.

### Brief description of the drawings

The present invention will be discussed in more detail below, using a number of exemplary embodiments, with reference to the attached drawings, in which
Figure 1 shows a schematic presentation of an electronic network modeled according to an embodiment of the present invention;
Figure 2 shows a diagram representing a database comprising items and relations between the items;
Figure 3 shows a representation of relations between a number of items of different types;
Figure 4 shows a schematic representation of an exemplary implementation of the present invention;
Figure 5 shows a schematic representation of a network implementation of the present invention; and
Figure 6 shows a diagram representing a database comprising items and relations between the items in a further example.

### Detailed description

In many applications, a database model may be used to represent actual items and relations between items in the real world. E.g. an item may be represented by a node, and the relation between two nodes as a branch between the two nodes. The branch may furthermore have one or more specific properties relevant for the application.

In an exemplary application, a service determines which persons are relevant in a situation, based on the relations between the persons and other items, which are stored in a database. For example, a police officer may be relevant for some incident because a database contains a record which states, that the officer has dealt with the suspect of the incident. Or, the police officer may be relevant because the database contains a record which states, that the officer has had an appointment at the location of the incident. Or, the police officer may be on duty in the area where the incident took place.

Using current technology, the different ways in which a person can be relevant is determined first. Then, for every way in which a person is relevant, the amount of relevance is determined independently according to some formula that models the relevancy. Then these relevancies are added to find the total relevancy of the person.

According to an embodiment of the present invention, the plurality of interrelated items and relations in the database can be modeled as nodes and impedances (e.g. resistors) in a network. Each item has an associated node, and a relation between two items is modeled as an impedance between the associated nodes. The impedance value is lower for items that are more relevant to each other. The relevance (or measure of relevancy) of a person for an item is a function (in this case the inverse) of the impedance in the network that is constructed in this manner from the database between the node that represents the person and the node that represents the item.

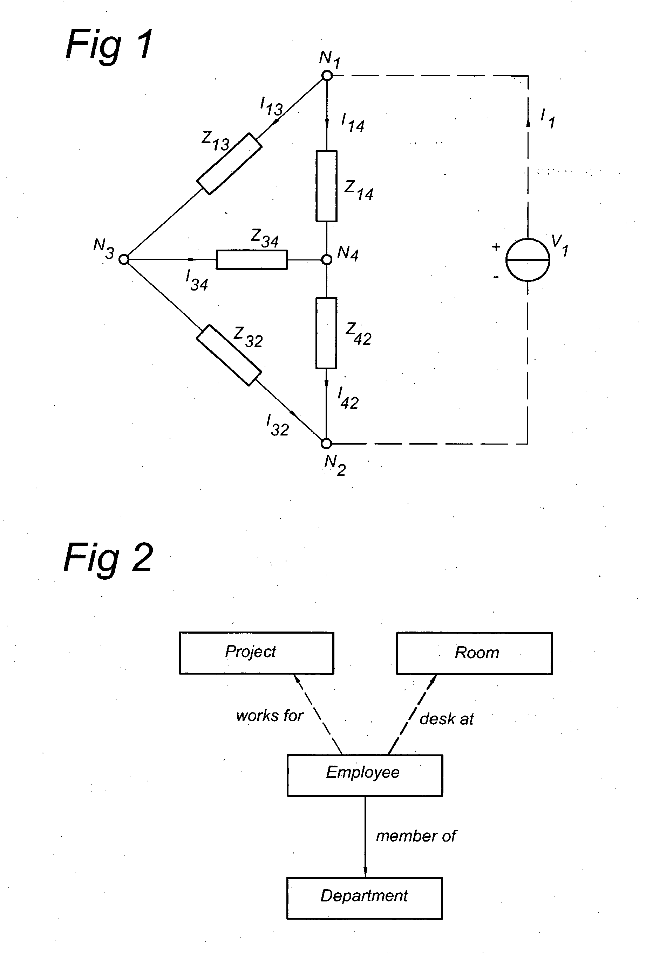

In an exemplary embodiment an electronic network is constructed as shown in Figure 1 from the database that contains a plurality of interrelated items and associated relations. Each item in the database is a node Nᵢ in the network. Each relation between two items is an impedance Zᵢⱼ between the two nodes Nᵢ and Nⱼ. To determined the measure of relevancy between two items in the database, the impedance between the corresponding nodes Nᵢ in the corresponding electronic network is calculated. The measure of relevancy is the inverse of the impedance. In Figure 1, an exemplary situation is shown of an electronic network having four nodes N₁-N₄ (representing four items or entities), in which the relations are modeled as impedances Zᵢⱼ (i and j being the indices of the nodes Nᵢ, Nⱼ between which the impedance Zᵢⱼ is present).

When the relations are modeled as resistive impedances (resistors), the impedance between two nodes Nᵢ and Nⱼ in the electronic network can be determined by adding an ideal voltage source V₁ of 1 Volt between the two nodes Nᵢ and Nⱼ to the network. This is indicated by the dotted line in Figure 1. Then the resistance in Ohms is equal to the inverse of the current I₁ through the voltage source V₁ (R=V/I). This means, that in the case of a voltage source V1 of 1 Volt, the relevance is equal to the current I₁ through the voltage source V₁. Naturally another voltage source value may be chosen, and the resistance value (and measure of relevancy) may then also be determined using Ohm's Law.

The currents and/or impedances in an electronic network can be calculated or determined using existing technologies, e.g. using simulations, network calculations or actual construction of the network and actual measurements.

The currents I₁ through the voltage source V₁ is the total relevance between the two items represented by nodes N₁ and N₂. The sum of currents from and to a node Nⱼ (e.g. I₁₄+I₃₄-I₄₂ for node N₄), is a measure of its contribution to the relevance. The current through an impedance Zᵢⱼ is a measure of its contribution to the total relevance. This can be used to analyze the contributors to the relevance.

The relevance of a relation, as modeled by the impedances Zᵢⱼ can be a constant, but also a function of some parameter, which may be a context parameter (Zᵢⱼ = f(parameter x)). In this case, all calculations of the currents can be performed using functions instead of constant values. The resulting current I₁ through the voltage source V₁ is then also a function of that parameter. This function can be used to calculate the relevance under different values of the parameter.

A useful parameter may be time (Zᵢⱼ=f(t)), which allows to model a time varying value (e.g. a periodically changing value, a continuous changing value, or a stepwise changing value). For some relations the relevance may decline over time. This can be modeled by making the impedance Zᵢⱼ a function that increases over time.

For the calculations with functions of parameters it is practical to choose functions that are a quotient of polynomials (e.g. (a₀+a₁x)/(b₀+b₁y)). When quotients of polynomials are added, subtracted, multiplied or divided, the result is again a quotient of polynomials.

In the following, examples of application where an embodiment of the present method is applied are described in more detail.

In a first example, a company is modeled with employees who are in a department and who work on a project and who have their desk in some room in the office. Some employees are in the same department, some are in the same project, and some are in the same room. The plurality of items in this example thus comprises employees, departments, projects and rooms. The relations between the employees, departments, projects and rooms are represented in a database. This database can be described by a diagram as shown in Figure 2.

The diagram shows three relation types: 'works for', 'desk at' and 'member of'. An employee is relevant for a project if the employee works for the project. An employee is relevant for a room if the employee has a desk in the room. An employee is relevant for a department if the employee works for the department. An expert may determine a quantitative value for the relevancy related to each of the three relations types.

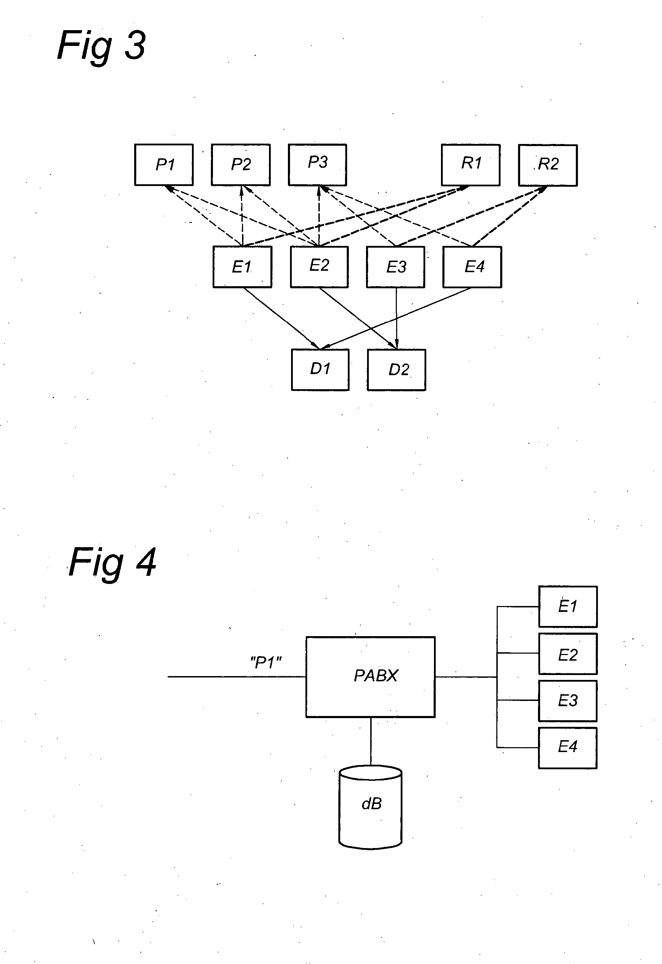

In an exemplary application, the company has four employees E1-E4, three projects P1-P3, two rooms R1-R2 and two departments D1-D2. The actual relation instances between the employees E1-E4 and the projects P1-P3, rooms R1-R2 and departments D 1-D2 are as represented by the schematic diagram of Figure 3. Each path in this figure represents a way in which one item or entity is relevant for another, represented by a line ('member of' relation), a small dash line ('works for' relation) or a bold dash line ('desk at' relation). For example, employee E1 is directly relevant for project P1 because E1 works for P1. This is a path E1 - P1. But E1 is also indirectly relevant for P1, for example because E1 is member of department D1, employee E4 is member of D1, E4 works for P3, E2 works for P3 and E2 works for P1. This corresponds to the path E1 - D1 - E4 - P3 - E2 - P1. The present embodiment is based on the assumption that the longer path should also contribute to the relevance between E1 and P1, but (much) less than the shorter path.

The method embodiment of the present invention calculates the relevance between E1 and P1 by considering the network in Figure 3 as an electric network, where the relations are resistors (a specific example of the impedance Zᵢⱼ described above). The resistances of the impedances Zᵢⱼ are the inverse of the relevance of the corresponding relation. So if the 'works for' relation makes an employee twice as relevant for a project as the 'member of' relation makes the employee for a department, the resistance of the impedance Zᵢⱼ corresponding to a 'works for' relation instance should be half of the resistance of an impedance Zᵢⱼ corresponding to a 'member of relation instance.

To determine the relevance between the items employee E1 and project P1, the resistance between the two corresponding nodes in the electrical network is determined. This can, as mentioned before, be done by mathematical calculations, simulation, etc. E.g. a voltage source providing 1 Volt may be added between E1 and P1. The current between E1 and P1 is then calculated. The current represents the relevance between E1 and P1.

The calculated relevance can, in this embodiment, be used to route calls to the company, as exemplified in the schematic representation of Figure 4. The private branch exchange PABX of a company may have access to a database dB which stores data regarding the projects, rooms, employees and departments and the relations between them. Now every project may have a phone number, e.g. as indicated by "P1" in Figure 4. When the private branch exchange PABX receives a call for the phone number of a project ("P1"), the most relevant employee E1-E4 is determined using the method described above and using the data in the database dB. Then the call is offered to the most relevant employee E1-E4. If the most relevant employee is unavailable, the next relevant employee E 1-E4 can be determined, until an available relevant employee is found.

Note that it is possible that two items or entities in the database are not connected through any path in the database. When in this case a voltage source is added, no current will flow between the nodes representing the entities in the electrical network. The lack of current represents a relevance of zero.

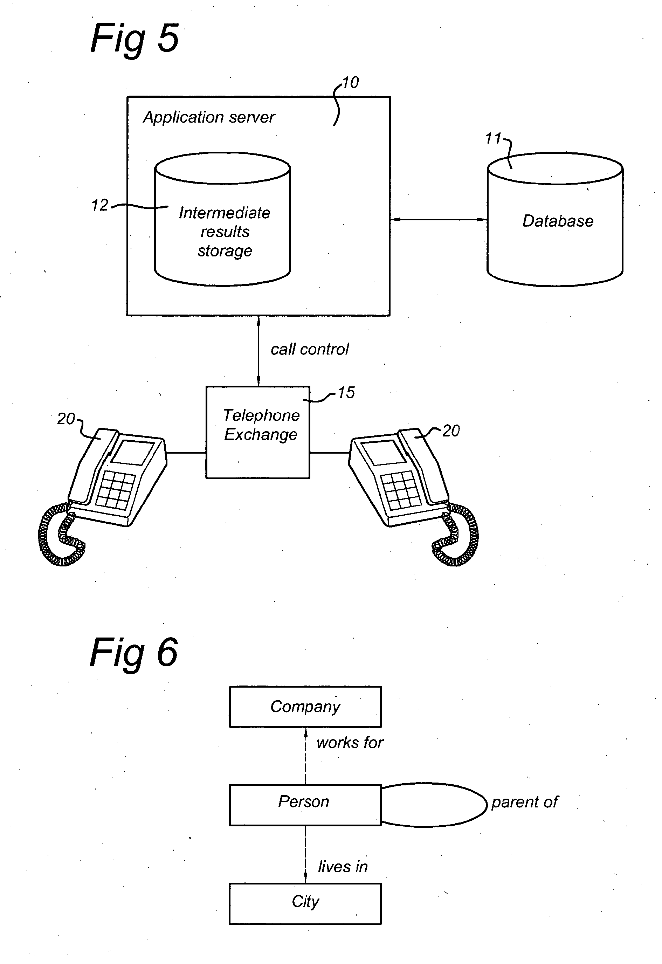

The services and applications described above may be implemented in a network unit in a communication network, e.g. in the form of an application server 10, as shown schematically in Figure 5. The communication network comprises a telephone exchange 15, which controls connections between a plurality of terminals 20 (of which two are shown as telephone terminals). The communication network 15 may be any type of communication network, e.g. a line based network (e.g. a POTS or ISDN network) or a wireless network (e.g. GSM or UMTS network). The terminals 20 are communication devices which allow the use of such a communication network.

The application server 10 has access to a database 11 (or multiple databases 11) that stores the relations and relevant items. The application in the application server 10 (e.g. in the form of a software program) retrieves the relations from the database 11, and constructs an internal model of the instances of the relations in the form of an electrical network. This transformation from relations to an electrical network model with resistance values can be performed at every query to the application, but for the calculation of currents in the network some work can be shared from one calculation to the next. For example, cycles in the electrical network must be detected when calculating using Kirchhoff's current and voltage laws. This work and more can be done once, and the intermediate result stored in an intermediate memory or database 12. Work (calculations) remains to be done for the calculation of the relevance between any pair of items, because each relevance calculation requires the addition of a (virtual) voltage source to the model, which modifies the modeled network. The application server 10 may be (directly or indirectly) connected to the telephone exchange 15, in order to be able to influence and control the connections between terminals 20 (indicated as 'call control' in Figure 5), e.g. using the embodiment described with reference to Figures 2-4.

A further application example in which the present invention may be used is an emergency centre application. In case of an emergency such as a traffic accident, the emergency services may need to contact a person that is related to the casualty. They may need to contact the related person only to inform the related person, or perhaps to obtain relevant information, such as medical information. Suppose that the emergency services have access to information about family relations, employment data and the city in which persons live. This data related to persons can be represented by the database representation of Figure 6.

A person may work for one or more companies (small dash line), and live in one or more cities (bold dash line), and be the parent of one or more persons (line). Through the 'parent of' relation type all family relations are modeled: two siblings are related through their parents. In this model the relevance of the 'parent of' relation would be much higher than the relevance of the 'works for' relation. The relevance of the 'works for' relation would be higher than the 'lives in' relation, because two persons who work for the same company would be more relevant to each other than two persons who live in the same city.

This service could be deployed at the operator of an emergency centre. There the relations can be retrieved from databases that contain the relations and the relations can be transformed to the model of an electrical network. When an emergency call arrives at the emergency centre, the operator can type the name or some identifier of the casualty, after which the most relevant person can be determined. Then the operator can call the most relevant person. Using this method, the operator no longer has to look through the different databases separately, but an objective evaluation of the most relevant person is presented based on the combination of different relations. The contributors to the relevance, represented by the currents through the other nodes and resistors in the simulated electrical network, can be presented to the operator, sorted from high current through low current. When the most relevant person is informed, some background information of the relevance can be given. For example, if the related person is the brother of the casualty, there will be a high current in the simulated network from the casualty to the parents of the casualty and from the parents to the brother. This means that the parents and the corresponding 'parent of' relations involved have a high contribution to the relevance of the brother. These relations can be presented to the operator, who can use this information when contacting the brother of the casualty. It may be useful for the operator to know that the person is relevant because he has two parents in common with the casualty.

The present method according to one of the embodiments described above, may be implemented in a network unit in a communication network, such as the application server 10 as described with reference to Figure 5. The present method may also be implemented in an already existing network unit, such as a telephone switch (e.g. the PABX of the embodiment described with reference to Figure 4). The method may be implemented by loading computer executable instructions (e.g. a software program) stored on a computer program product, in program memory of a computer system, which is e.g. part of the network unit. The computer system comprises a processor or processor system, which are arranged to load the computer executable instructions from the program memory, and to execute the associated instructions. The processor system may be a single- or multi-processor system, or a combination of a number of remote processors.

## Claims

1. Method in a communication network for routing a call to a terminal to be contacted, the communication network comprising a plurality of terminals and one or more databases comprising a plurality of interrelated items and relations between the interrelated items, wherein a terminal of the plurality of terminals is associated with one of the plurality of interrelated items; the method comprising:
- receiving a call;
- receiving an item associated with the call;
- determining the terminal to be contacted from the plurality of terminals;
**characterised in that**
- the step of determining the terminal to be contacted comprises the steps of:
- retrieving the plurality of interrelated items (N₁-N₄) and associated relations from the one or more databases (11), wherein the item associated with a call is associated with an interrelated item (N₁) and a terminal is associated with an interrelated item (N₂);
- modelling, by a network unit, the plurality of interrelated items as nodes (N₁-N₄) in a network;
- modelling the relations between interrelated items, wherein a relation between two interrelated items is modelled as an impedance (Zᵢⱼ) between the two nodes that represent the two interrelated items;
- determining for each terminal the impedance value between the node (N₂) that represents that terminal and the node (N₁) that represents the item associated with the call, and
- routing the call to the terminal having the lowest impedance value between the node (N₂) that represents that terminal and the node (N₁) that represents the item associated with the call.

2. Method according to claim 1, in which the impedance (Zᵢⱼ) is a resistor.

3. Method according to claim 1 or 2, in which the impedance (Zᵢⱼ) has a value which is a function of a parameter.

4. Method according to claim 3, in which the impedance (Zᵢⱼ) has a time varying value.

5. Method according to claim 3 or 4, in which the function comprises a quotient of polynomials.

6. Method according to any one of the claims 1-5, in which the impedance value between the two nodes (N₁, N₂) is determined by adding a voltage source (V₁) with a predetermined voltage, the terminals of the voltage source (V₁) being connected to the two nodes (N₁, N₂), and determining the current (I₁) through the voltage source (V₁).

7. Method according to any one of the claims 1-6, in which intermediate results of determining the impedance value are stored for re-use.

8. Network unit (10; PABX) in a communication network arranged to execute the method according to any one of claims 1-7.

9. Network unit according to claim 8, in which the communication network is arranged to provide connections to one or more terminals (20), and in which the network unit (10; PABX) is arranged to determine a terminal (20) to be contacted.

10. Network unit according to claim 9, in which the network unit (10; PABX) is arranged to receive a call directed at an item of a first type, and to determine the terminal to be contacted associated with an item of a second type, in which the first type and second type are different.

11. Network unit according to any one of claims 8-10, wherein the network unit comprises an application server (10) or a telephone switch, such as a private branch exchange (PABX).

12. Network unit according to any one of claims 8-11, wherein the network unit includes a computer system comprising a processor or processing system arranged to execute the method according to any one of claims 1-7

13. Computer program product comprising computer executable code, which when loaded on a computer system, allows the computer system to execute the method according to any one of claims 1-7.

## Patentansprüche

1. Verfahren in einem Kommunikationsnetzwerk zum Routen eines Anrufs zu einem Endgerät, das zu kontaktieren ist, wobei das Kommunikationsnetzwerk eine Mehrzahl von Endgeräten und eine oder mehrere Datenbanken aufweisen, die eine Mehrzahl miteinander verbundener Elemente und Beziehungen zwischen den miteinander verbundenen Elementen aufweisen, wobei ein Endgerät der Mehrzahl von Endgeräten zu einem der Mehrzahl miteinander verbundener Elemente gehört, wobei das Verfahren Folgendes aufweist:
- Empfangen eines Anrufs;
- Empfangen eines Elements, das zu dem Anruf gehört;
- Bestimmen des zu kontaktierenden Geräts aus der Mehrzahl von Endgeräten;
**dadurch gekennzeichnet, dass**
- dieser Schritt des Bestimmens des zu kontaktierenden Endgeräts die folgenden Schritte aufweist:
- Holen der Mehrzahl miteinander verbundener Elemente (N₁-N₄) und dazugehörenden Beziehungen von einer oder mehreren Datenbanken (11), wobei das zu einem Anruf gehörende Element zu einem verbundenen Element (N₁) gehört und ein Endgerät zu einem verbundenen Element (N₂) gehört;
- durch eine Netzwerkeinheit Modellieren der Mehrzahl miteinander verbundener Elemente als Knoten (N₁-N₄) in einem Netzwerk;
- Modellieren der Beziehungen zwischen den miteinander verbundenen Elementen, wobei eine Beziehung zwischen zwei miteinander verbundenen Elementen als eine Impedanz (Zᵢⱼ) zwischen den zwei Knoten, die die zwei miteinander verbundenen Elemente darstellen, modelliert ist;
- für jedes Endgerät Bestimmen des Impedanzwerts zwischen dem Knoten (N₂), der das Endgerät darstellt, und dem Knoten (N₁), der das zu dem Anruf gehörende Element darstellt, und
- Routen des Anrufs zu dem Endgerät, das den niedrigsten Impedanzwert zwischen dem Knoten (N₂), der das Endgerät darstellt, und dem Knoten (N₁), der das zu dem Anruf gehörende Element darstellt, aufweist.

2. Verfahren nach Anspruch 1, bei dem die Impedanz (Zᵢⱼ) ein Widerstand ist.

3. Verfahren nach Anspruch 1 oder 2, bei dem die Impedanz (Zᵢⱼ) einen Wert hat, der eine Funktion eines Parameters ist.

4. Verfahren nach Anspruch 3, bei dem die Impedanz (Zᵢⱼ) einen zeitlich veränderlichen Wert hat.

5. Verfahren nach Anspruch 3 oder 4, bei dem die Funktion einen Quotienten von Polynomen aufweist.

6. Verfahren nach einem der Ansprüche 1 bis 5, bei dem der Impedanzwert zwischen den zwei Knoten (N₁, N₂) bestimmt wird, indem eine Spannungsquelle (V₁) mit einer vorbestimmten Spannung hinzugefügt wird, wobei die Klemmen der Spannungsquelle (V₁) mit den zwei Knoten (N₁, N₂) verbunden sind, und Bestimmen des Stroms (I₁), der durch die Spannungsquelle (V₁) fließt.

7. Verfahren nach einem der Ansprüche 1 bis 6, bei dem Zwischenresultate des Bestimmens des Impedanzwerts zur Wiederverwendung gespeichert werden.

8. Netzwerkeinheit (10; PABX) in einem Kommunikationsnetzwerk, die eingerichtet ist, um das Verfahren nach einem der Ansprüche 1 bis 7 auszuführen.

9. Netzwerkeinheit nach Anspruch 8, bei der das Kommunikationsnetzwerk eingerichtet ist, um Verbindungen zu einem oder mehreren Endgeräten (20) bereitzustellen, und bei dem die Netzwerkeinheit (10; PABX) eingerichtet ist, um ein zu kontaktierendes Endgerät (20) zu bestimmen.

10. Netzwerkeinheit nach Anspruch 9, bei der die Netzwerkeinheit (10; PABX) eingerichtet ist, um einen Anruf zu empfangen, der zu einem Element eines ersten Typs gerichtet ist, und das zu kontaktierende Endgerät, das zu einem Element eines zweiten Typs gehört, zu bestimmen, wobei der erste Typ und der zweite Typ unterschiedlich sind.

11. Netzwerkeinheit nach einem der Ansprüche 8 bis 10, wobei die Netzwerkeinheit einen Anwendungsserver (10) eine Wählanlage, wie zum Beispiel eine Wählanlagenvermittlung (PABX), aufweist.

12. Netzwerkeinheit nach einem der Ansprüche 8 bis 11, wobei die Netzwerkeinheit ein Computersystem aufweist, das einen Prozessor oder ein Prozessorsystem aufweist, das eingerichtet ist, um das Verfahren nach einem der Ansprüche 1 bis 7 auszuführen.

13. Computerprogrammprodukt, das einen von einem Computer ausführbaren Code aufweist, der, wenn er auf ein Computersystem geladen wird, es dem Computersystem erlaubt, das Verfahren nach einem der Ansprüche 1 bis 7 auszuführen.

## Revendications

1. Procédé dans un réseau de communications pour acheminer un appel vers un terminal à contacter, le réseau de communications comprenant une pluralité de terminaux et une ou plusieurs bases de données comprenant une pluralité d'éléments liés et des relations entre les éléments liés, dans lequel un terminal de la pluralité de terminaux est associé à l'un de la pluralité d'éléments liés ; le procédé comprenant :
- la réception d'un appel ;
- la réception d'un élément associé à l'appel ;
- la détermination du terminal à contacter parmi la pluralité de terminaux ;
**caractérisé en ce que**
- l'étape de la détermination du terminal à contacter comprend les étapes de :
- l'extraction de la pluralité d'éléments liés (N₁-N₄) et des relations associées de l'une ou plusieurs bases de données (11), dans lequel l'élément associé à un appel est associé à un élément lié (N₁) et un terminal est associé à un élément lié (N₂) ;
- la modélisation, par une unité de réseau, de la pluralité d'éléments liés en tant que noeuds (N₁-N₄) dans un réseau ;
- la modélisation des relations entre des éléments liés, dans lequel une relation entre deux éléments liés est modélisée en tant qu'impédance (Zᵢⱼ) entre les deux noeuds qui représentent les deux éléments liés ;
- la détermination pour chaque terminal de la valeur d'impédance entre le noeud (N₂) qui représente ce terminal et le noeud (N₁) qui représente l'élément associé à l'appel, et
- l'acheminement de l'appel vers le terminal ayant la plus petite valeur d'impédance entre le noeud (N₂) qui représente ce terminal et le noeud (N₁) qui représente l'élément associé à l'appel.

2. Procédé selon la revendication 1, dans lequel l'impédance (Zᵢⱼ) est une résistance.

3. Procédé selon la revendication 1 ou 2, dans lequel l'impédance (Zᵢⱼ) a une valeur qui est une fonction d'un paramètre.

4. Procédé selon la revendication 3, dans lequel l'impédance (Zᵢⱼ) a une valeur variant dans le temps.

5. Procédé selon la revendication 3 ou 4, dans lequel la fonction comprend un quotient de polynômes.

6. Procédé selon l'une quelconque des revendications 1 à 5, dans lequel la valeur d'impédance entre les deux noeuds (N₁, N₂) est déterminée en ajoutant une source de tension (V₁) à une tension prédéterminée, les bornes de la source de tension (V₁) étant reliées aux deux noeuds (N₁, N₂), et déterminant l'intensité (I₁) à travers la source de tension (V₁).

7. Procédé selon l'une quelconque des revendications 1 à 6, dans lequel des résultats intermédiaires de la détermination de la valeur d'impédance sont stockés pour être réutilisés.

8. Unité de réseau (10 ; PABX) dans un réseau de communications agencée pour exécuter le procédé selon l'une quelconque des revendications 1 à 7.

9. Unité de réseau selon la revendication 8, dans laquelle le réseau de communications est agencé pour fournir des connexions à un ou plusieurs terminaux (20), et dans laquelle l'unité de réseau (10 ; PABX) est agencée pour déterminer un terminal (20) à contacter.

10. Unité de réseau selon la revendication 9, dans laquelle l'unité de réseau (10 ; PABX) est agencée pour recevoir un appel dirigé vers un élément d'un premier type, et pour déterminer le terminal à contacter associé à un élément d'un deuxième type, dans laquelle le premier type et le deuxième type sont différents.

11. Unité de réseau selon l'une quelconque des revendications 8 à 10, dans laquelle l'unité de réseau comprend un serveur d'application (10) ou un commutateur téléphonique, comme un central téléphonique privé (PABX).

12. Unité de réseau selon l'une quelconque des revendications 8 à 11, dans laquelle l'unité de réseau comprend un système informatique comprenant un processeur ou un système de traitement agencé pour exécuter le procédé selon l'une quelconque des revendications 1 à 7.

13. Produit de programme informatique comprenant un code exécutable par ordinateur qui, lorsqu'il est chargé sur un système informatique, permet au système informatique d'exécuter le procédé selon l'une quelconque des revendications 1 à 7.
